# EUROPEAN PATENT APPLICATION

(11) **EP 3 951 514 A1**
(43) Date of publication of application: **09.02.2022**
(21) Application number: 20782054.9
(22) Date of filing: 12.02.2020
(51) Int. Cl.: G05B 9/02, G05B 19/05, G06F 21/57, G06F 13/00

(54) **CONTROLLER SYSTEM, SUPPORT DEVICE, AND EVALUATION METHOD**

(30) Priority: 29.03.2019 JP 2019066008
(71) Applicant: OMRON Corporation, Shiokoji-dori, Shimogyo-Ku Kyoto-shi Kyoto 600-8530 (JP)
(72) Inventor: HIROBE, Naoki, Kyoto-shi, Kyoto 600-8530 (JP); KOGAWARA, Toru, Kyoto-shi, Kyoto 600-8530 (JP); YAMAMOTO, Taisei, Kyoto-shi, Kyoto 600-8530 (JP); NAGATA, Yuta, Kyoto-shi, Kyoto 600-8530 (JP)
(74) Representative: Becker, Eberhard
(86) International application number: PCT/JP2020/005269
(87) International publication number: WO 2020/202809

(57) **Abstract**

A control system according to the present invention includes: a control unit that executes control computation for controlling a control target; a security unit that is connected to the control unit and that is in charge of security functions for a controller system; an attack-pattern preparing means for obtaining setting information in the controller system and preparing a pattern of attack against the controller system on the basis of the setting information obtained; and an attack-conducting means for conducting an attack against the controller system according to the created pattern of attack and evaluating whether or not the security functions set in the controller system are valid on the basis of the behavior of the controller system in response to the attack.

## Description

### BACKGROUND

### Technical Field

The disclosure relates to an evaluation method for a security function for a controller system that controls a control target.

### Description of Related Art

In recent years, damage such as malware has occurred at manufacturing sites such as factories, and security measures have become indispensable for control devices such as programmable logic controllers (PLCs). Therefore, when developing equipment and production lines of factories and the like, it is necessary for production engineers, equipment manufacturer developers and the like to take security measures.

In PLC, for example, as disclosed in Japanese Laid-Open No. 2000-137506 (Patent Document 1), when an abnormality history is registered or when a predetermined time arrives, an e-mail is sent to a predetermined destination, and no security measures are taken into consideration.

### Related Art

### Patent Document

[Patent Document 1] Japanese Laid-Open No. 2000-137506

### SUMMARY

### Technical Problem

In particular, with the recent progress of information and communication technology (ICT), a control device is also connected to various external devices via a network, and processing executed by the control device is also becoming more sophisticated. With such use of network or intelligence, the types of security threats that can be assumed are increasing.

Security functions are set for such security threats, but specialized knowledge is required to evaluate whether appropriate security functions are set, and it takes a long education time for production engineers and equipment manufacturer developers to acquire knowledge in order to perform threat analysis. In addition, when a specialist is hired for security threat analysis, the labor cost of the specialist becomes a cost burden for the factory and the equipment manufacturer.

The disclosure provides a mechanism capable of pre-evaluating the validity of a security function set against a security threat that may occur due to the use of network or intelligence in a controller system.

### Solution to the Problem

A controller system according to an aspect of the disclosure includes: a control unit that executes a control calculation for controlling a control target; a security unit that is connected to the control unit and is in charge of a security function for the controller system; an attack pattern creation part that acquires setting information in the controller system and creates an attack pattern for the controller system based on the acquired setting information; and an attack execution part that executes an attack on the controller system according to the created attack pattern and evaluates validity of the security function set in the controller system based on a behavior of the controller system in response to the attack.

According to this aspect, even a user with little specialized knowledge can easily pre-evaluate the validity of the security function set for the controller system.

The controller system may further include a threat scenario creation part that creates a threat scenario including one or more threats assumed for the controller system based on device configuration information and protected asset information acquired from the controller system. According to this configuration, it is possible to perform an evaluation according to a threat scenario created based on the device configuration information and the protected asset information acquired from the controller system.

The setting information may include network connection setting information that defines data communication between the controller system and an external device. According to this configuration, the validity of the security function can be evaluated for network-related areas where threats are likely to occur.

The threat scenario creation part may determine the threat scenario based on setting information of connection established by the controller system with an external device. According to this configuration, it is possible to perform a pre-evaluation in consideration of threats such as spoofing of an external device to which the controller system establishes a connection.

The threat scenario creation part may determine the threat scenario based on information of a variable shared in the controller system. According to this configuration, it is possible to perform a pre-evaluation in consideration of an attack that exploits a variable shared in the controller system.

The threat scenario creation part may determine the threat scenario based on information of a variable referred to in a user program executed by the controller system. According to this configuration, it is possible to perform a pre-evaluation in consideration of an attack with a defect in a variable referred to by the user program.

The attack pattern creation part may present the created one or more attack patterns to a user as candidates, and determine an attack pattern to be used for the attack by a user operation. According to this configuration, the security function can be evaluated by an attack pattern according to the needs of the user.

The user operation may include at least one of an instruction instructing which attack pattern to select from the candidates of the one or more attack patterns and an instruction instructing to adjust a degree of the attack included in the attack pattern. According to this configuration, the security function can be evaluated according to the required attack pattern or the required degree of attack.

According to another aspect of the disclosure, a support device connected to a controller system which includes a control unit that executes a control calculation for controlling a control target and a security unit that is connected to the control unit and is in charge of a security function is provided. The support device includes: an attack pattern creation part that acquires setting information in the controller system and creates an attack pattern for the controller system based on the acquired setting information; and an attack execution part that executes an attack on the controller system according to the created attack pattern and evaluates validity of the security function set in the controller system based on a behavior of the controller system in response to the attack.

According to another aspect of the disclosure, an evaluation method performed by a controller system is provided. The controller system includes a control unit that executes a control calculation for controlling a control target and a security unit that is connected to the control unit and is in charge of a security function for the controller system. The evaluation method includes: acquiring setting information in the controller system; creating an attack pattern for the controller system based on the acquired setting information; executing an attack on the controller system according to the created attack pattern; and evaluating validity of the security function set in the controller system based on a behavior of the controller system in response to the attack.

### Effects

According to the disclosure, it is possible to solve a new problem of analyzing security threats that may occur due to the use of network or intelligence of the controller system and taking measures against the threats.

### BRIEF DESCRIPTION OF THE DRAWINGS

FIG. 1 is an appearance diagram showing a configuration example of the controller system according to the embodiment.
FIG. 2 is a schematic diagram for illustrating a pre-evaluation of security functions provided by the controller system according to the embodiment.
FIG. 3 is a schematic diagram showing a hardware configuration example of the control unit configuring the controller system according to the embodiment.
FIG. 4 is a schematic diagram showing a hardware configuration example of the security unit configuring the controller system according to the embodiment.
FIG. 5 is a schematic diagram showing a hardware configuration example of the safety unit configuring the controller system according to the embodiment.
FIG. 6 is a block diagram for illustrating a system configuration for performing the pre-evaluation of the security functions with a support device connected to the controller system according to the embodiment.
FIG. 7 is a schematic diagram showing a hardware configuration example of the support device connected to the controller system according to the embodiment.
FIG. 8 is a sequence for illustrating the pre-evaluation of the security functions with the controller system and the support device according to the embodiment.
FIG. 9 is a flowchart showing a processing procedure related to the pre-evaluation of the security functions according to the embodiment.
FIG. 10 is a flowchart showing a processing procedure related to the pre-evaluation of a security functions according to the embodiment.
FIG. 11 is a schematic diagram showing an example of the attack pattern database used in the controller system according to the embodiment.
FIG. 12 is a diagram showing an example of a user interface screen related to an attack pattern provided by the controller system according to the embodiment.
FIG. 13 is a diagram showing an example of the user interface screen showing an evaluation result of an attack executed according to the settings shown in FIG. 12.
FIG. 14 is a diagram showing an example of the user interface screen related to output of an evaluation result provided by the controller system according to the embodiment.

### DESCRIPTION OF THE EMBODIMENTS

Embodiments of the disclosure will be described in detail below with reference to the drawings. Further, in the drawings, the same or corresponding parts are denoted by the same reference numerals, and descriptions thereof will not be repeated.

### <A. Application Example>

First, an example of the scenario in which the disclosure is applicable will be described. First, the configuration of a controller system 1 according to the embodiment will be described.

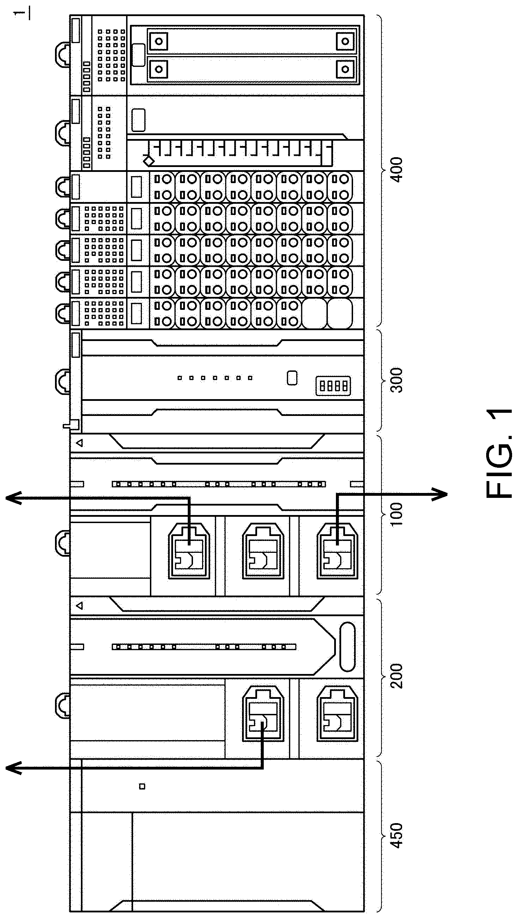

FIG. 1 is an appearance diagram showing a configuration example of the controller system 1 according to the embodiment. With reference to FIG. 1, the controller system 1 includes a control unit 100, a security unit 200, a safety unit 300, one or more functional units 400, and a power supply unit 450.

The control unit 100 and the security unit 200 are connected via any data transmission line (such as PCI Express or Ethernet (registered trademark)). The control unit 100 is connected to the safety unit 300 and the one or more functional units 400 via an internal bus (not shown).

The control unit 100 executes central processing in the controller system 1. The control unit 100 executes a control calculation for controlling a control target according to a requirement specification designed as desired. The control calculation executed by the control unit 100 is also referred to as "standard control" in contrast to the control calculation executed by the safety unit 300 described later. In the configuration example shown in FIG. 1, the control unit 100 has one or more communication ports.

The security unit 200 is connected to the control unit 100 and is in charge of the security functions for the controller system 1. In the configuration example shown in FIG. 1, the security unit 200 has one or more communication ports. Details of the security functions provided by the security unit 200 will be described later.

The safety unit 300, independently of the control unit 100, executes a control calculation for realizing a safety function related to the control target. The control calculation executed by the safety unit 300 is also referred to as "safety control." Usually, the "safety control" is designed to meet the requirements for realizing the safety function specified in IEC 61508 and the like. The "safety control" is a general term of processing for preventing human safety from being threatened by equipment or machines.

The functional unit 400 provides various functions for realizing control of various control targets by the controller system 1. The functional unit 400 may typically include an I/O unit, a safety I/O unit, a communication unit, a motion controller unit, a temperature control unit, a pulse counter unit, and the like. For example, a digital input (DI) unit, a digital output (DO) unit, an analog input (AI) unit, an analog output (AO) unit, a pulse catch input unit, a composite unit obtained by mixing a plurality of types, and the like may be used as the I/O unit. The safety I/O unit is in charge of I/O processing related to safety control.

The power supply unit 450 supplies power of a predetermined voltage to each unit configuring the controller system 1.

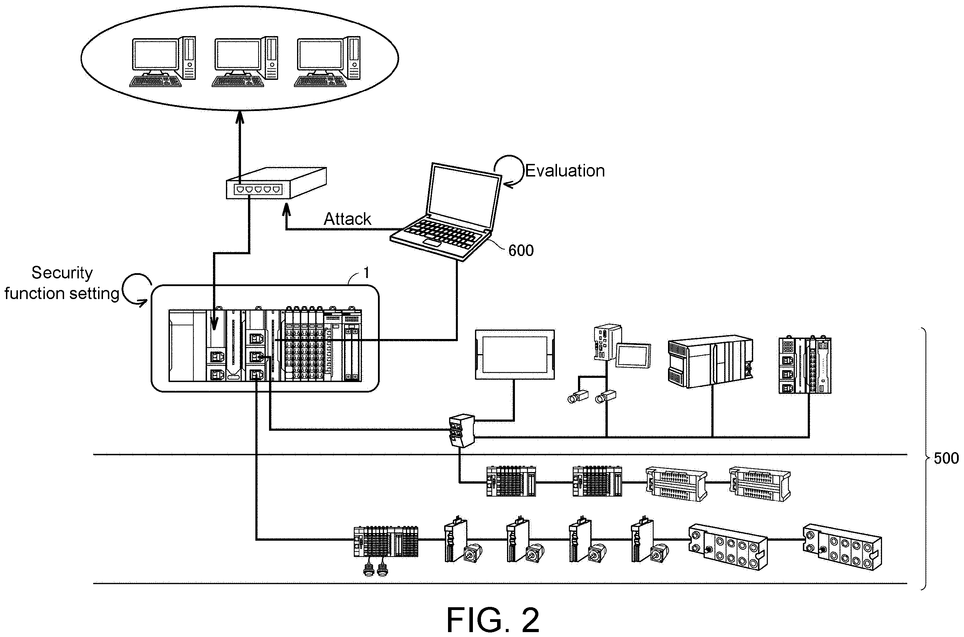

FIG. 2 is a schematic diagram for illustrating a pre-evaluation of security functions provided by the controller system 1 according to the embodiment. With reference to FIG. 2, one or more field devices 500 are connected to the controller system 1. The field device 500 may include a remote IO device, a servo, a sensor, a human machine interface (HMI), and the like.

The controller system 1 has a security function, and the necessary setting (security function setting) is made via a support device 600 or the like (security function setting). The support device 600 connected to the controller system 1 acquires necessary information from the controller system 1 to create a threat scenario, and the support device 600 determines an attack pattern based on the created threat scenario. Then, the support device 600 executes an attack on the controller system 1 according to the determined attack pattern, and evaluates the validity of the set security functions based on the behavior of the controller system 1 in response to the attack. The evaluation result is provided to the user according to the need.

### <B. Hardware Configuration Example of Each Unit>

Next, a hardware configuration example of each unit configuring the controller system 1 according to the embodiment will be described.

### (b1: Control Unit 100)

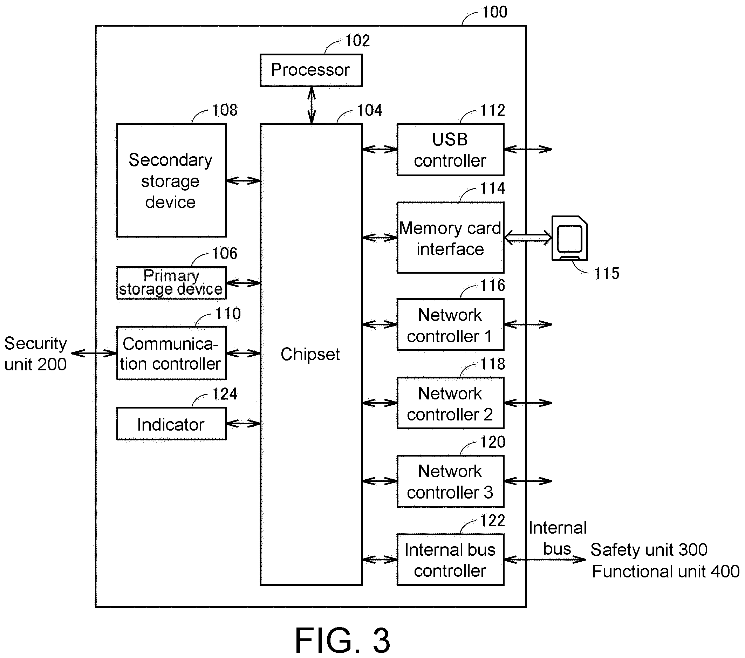

FIG. 3 is a schematic diagram showing a hardware configuration example of the control unit 100 configuring the controller system 1 according to the embodiment. With reference to FIG. 3, the control unit 100 includes, as main components, a processor 102, such as a central processing unit (CPU) or a graphical processing unit (GPU), a chipset 104, a primary storage device 106, a secondary storage device 108, a communication controller 110, a universal serial bus (USB) controller 112, a memory card interface 114, network controllers 116, 118, and 120, an internal bus controller 122, and an indicator 124.

The processor 102 realizes the control calculation related to standard control and various kinds of processing as described later by reading various programs stored in the secondary storage device 108, and expanding them in the primary storage device 106 to execute them. The chipset 104 realizes the processing of the control unit 100 as a whole by mediating the data exchange between the processor 102 and each component.

In addition to the system program, the secondary storage device 108 stores a control program that operates in the execution environment provided by the system program.

The communication controller 110 is in charge of data exchange with the security unit 200. For example, a communication chip corresponding to PCI Express or Ethernet (registered trademark) can be adopted as the communication controller 110.

The USB controller 112 is in charge of data exchange with any information processing device via USB connection.

The memory card interface 114 is configured to allow a memory card 115 to be attached thereto or detached therefrom, and is capable of writing data such as the control program or various settings to the memory card 115 or reading data such as the control program or various settings from the memory card 115.

Each of the network controllers 116, 118, and 120 is in charge of data exchange with any device via the network. Industrial network protocols such as EtherCAT (registered trademark), EtherNet/IP (registered trademark), DeviceNet (registered trademark), CompoNet (registered trademark) or the like may be adopted for the network controllers 116, 118, and 120.

The internal bus controller 122 is in charge of data exchange with the safety unit 300 or the one or more functional units 400 configuring the controller system 1. A manufacturer-specific communication protocol may be used for the internal bus, or a communication protocol that is the same as or compliant with any of the industrial network protocols may be used.

The indicator 124 notifies the operation state of the control unit 100 and the like, and is configured by one or more light emitting diodes (LEDs) disposed on the surface of the unit.

FIG. 3 shows a configuration example in which the necessary functions are provided by the processor 102 executing the programs. However, a part or all of the provided functions may be implemented by using a dedicated hardware circuit, such as an application specific integrated circuit (ASIC), a field-programmable gate array (FPGA), and the like. Alternatively, the main parts of the control unit 100 may be realized by using hardware according to a general-purpose architecture, such as an industrial personal computer based on a general-purpose personal computer. In this case, multiple operating systems (OSs) for different purposes may be executed in parallel by using a virtualization technique, and the required applications may be executed on the respective OSs.

### (b2: Security Unit 200)

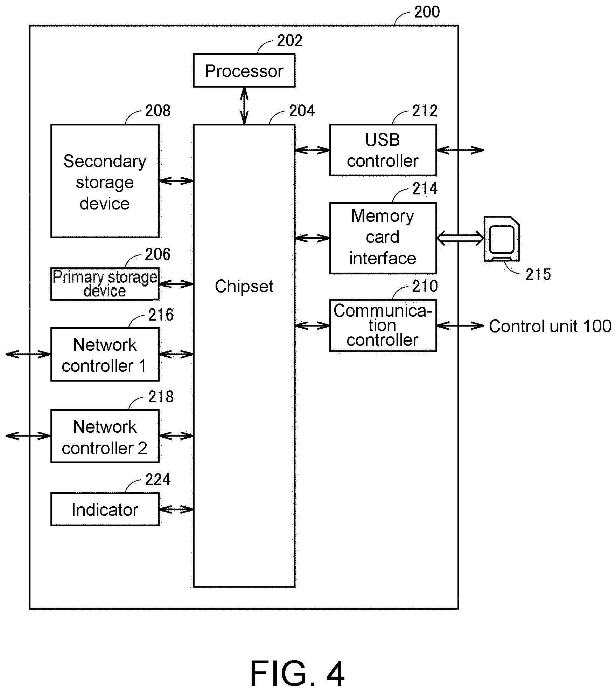

FIG. 4 is a schematic diagram showing a hardware configuration example of the security unit 200 configuring the controller system 1 according to the embodiment. With reference to FIG. 4, the security unit 200 includes, as main components, a processor 202, such as a CPU or a GPU, a chipset 204, a primary storage device 206, a secondary storage device 208, a communication controller 210, a USB controller 212, a memory card interface 214, network controllers 216 and 218, and an indicator 224.

The processor 202 realizes various security functions as described later by reading various programs stored in the secondary storage device 208 and expanding them in the primary storage device 206 to execute them. The chipset 204 realizes the processing of the security unit 200 as a whole by mediating the data exchange between the processor 202 and each component.

In addition to the system program, the secondary storage device 208 stores a security system program that operates in the execution environment provided by the system program.

The communication controller 210 is in charge of data exchange with the control unit 100. For example, a communication chip corresponding to PCI Express or Ethernet (registered trademark) can be adopted as the communication controller 210, in the same manner as the communication controller 210 to the control unit 100.

The USB controller 212 is in charge of data exchange with any information processing device via USB connection.

The memory card interface 214 is configured to allow a memory card 215 to be attached thereto or detached therefrom, and is capable of writing data such as the control program or various settings to the memory card 215 or reading data such as the control program or various settings from the memory card 215.

Each of the network controllers 216 and 218 is in charge of data exchange with any device via the network. The network controllers 216 and 218 may adopt a general-purpose network protocol such as Ethernet (registered trademark).

The indicator 224 notifies the operation state of the security unit 200 and the like, and is configured by one or more LEDs disposed on the surface of the unit.

FIG. 4 shows a configuration example in which the necessary functions are provided by the processor 202 executing the programs. However, a part or all of the provided functions may be implemented by using a dedicated hardware circuit, such as an ASIC, an FPGA, and the like. Alternatively, the main parts of the security unit 200 may be realized by using hardware according to a general-purpose architecture, such as an industrial personal computer based on a general-purpose personal computer. In this case, multiple OSs for different uses may be executed in parallel by using a virtualization technique, and the required applications may be executed on the respective OSs.

### (b3: Safety Unit 300)

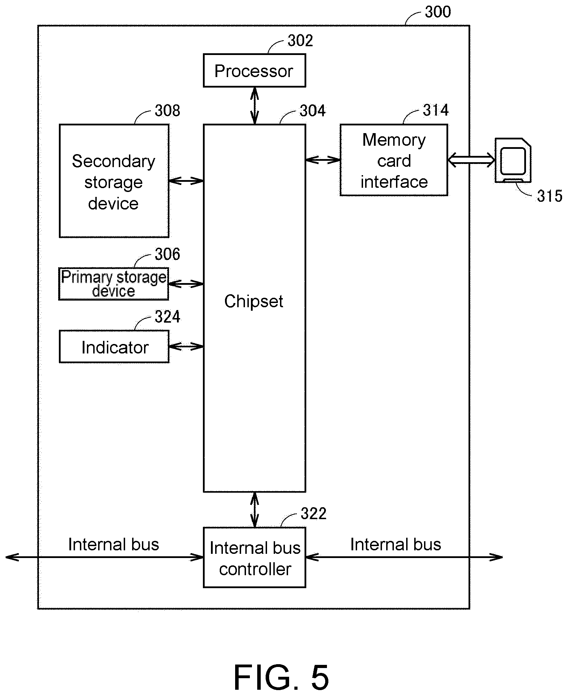

FIG. 5 is a schematic diagram showing a hardware configuration example of the safety unit 300 configuring the controller system 1 according to the embodiment. With reference to FIG. 5, the safety unit 300 includes, as main components, a processor 302, such as a CPU or a GPU, a chipset 304, a primary storage device 306, a secondary storage device 308, a memory card interface 314, an internal bus controller 322, and an indicator 324.

The processor 302 realizes the control calculation related to safety control and various kinds of processing as described later by reading various programs stored in the secondary storage device 308, and expanding them in the primary storage device 306 to execute them. The chipset 304 realizes the processing of the safety unit 300 as a whole by mediating the data exchange between the processor 302 and each component.

In addition to the system program, the secondary storage device 308 stores a safety program that operates in the execution environment provided by the system program.

The memory card interface 314 is configured to allow a memory card 315 to be attached thereto or detached therefrom, and is capable of writing data such as the safety program or various settings to the memory card 315 or reading data such as the safety program or various settings from the memory card 315.

The internal bus controller 322 is in charge of data exchange with the control unit 100 via the internal bus.

The indicator 324 notifies the operation state of the safety unit 300 and the like, and is configured by one or more LEDs disposed on the surface of the unit.

FIG. 5 shows a configuration example in which the necessary functions are provided by the processor 302 executing the programs. However, a part or all of the provided functions may be implemented by using a dedicated hardware circuit, such as an ASIC, an FPGA, and the like. Alternatively, the main parts of the safety unit 300 may be realized by using hardware according to a general-purpose architecture, such as an industrial personal computer based on a general-purpose personal computer. In this case, multiple OSs for different uses may be executed in parallel by using a virtualization technique, and the required applications may be executed on the respective OSs.

### <C. Pre-evaluation of Security Functions>

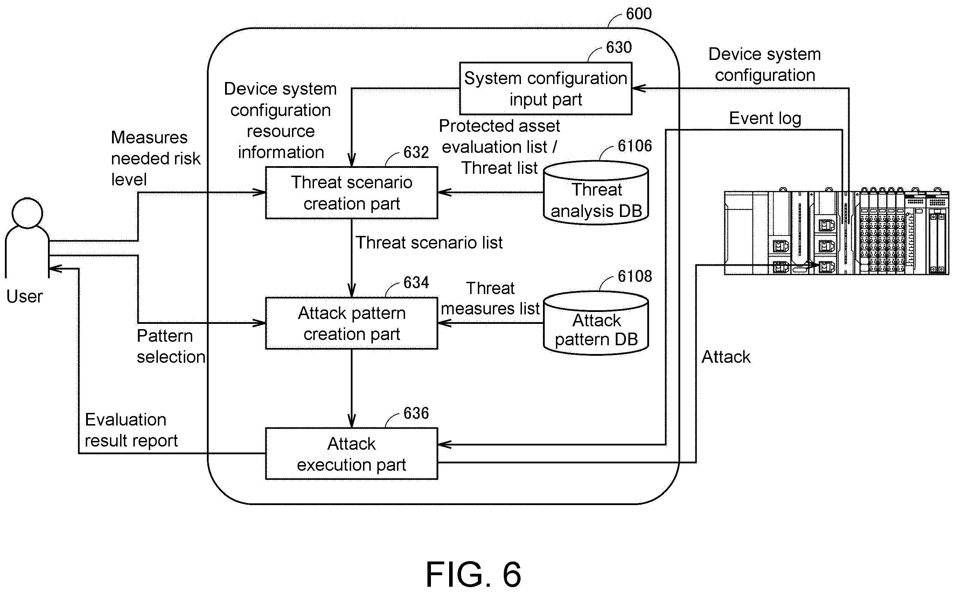

Next, an example of processing in the case of performing the pre-evaluation of the security functions set in the security unit 200 described above will be described. FIG. 6 is a block diagram for illustrating a system configuration for performing the pre-evaluation of the security functions with a support device connected to the controller system according to the embodiment. As shown in FIG. 6, the support device 600 includes a system configuration input part 630, a threat scenario creation part 632, an attack pattern creation part 634, and an attack execution part 636. The support device 600 further includes a threat analysis database 6106 and an attack pattern database 6108. However, the threat analysis database 6106 and the attack pattern database 6108 may be provided in an external server instead of in the support device 600.

First, the support device 600 acquires the device configuration information (device system configuration) and the protected asset information from the controller system 1 by the system configuration input part 630. The threat scenario creation part 632 creates a threat scenario from the importance level and the threat level of the threat analysis database 6106 according to the device configuration and the protected assets acquired by the system configuration input part 630.

In the specification, the term of "protected assets" means a set of elements that configure the controller system 1. The units being the targets of the "protected assets" can set as desired according to the control targets and the like. For example, the "protected asset" may be a device or the like that configures the controller system 1, and may include the control unit 100, the security unit 200, the field device 500, and the like as the units.

In the specification, the "importance level" is an index indicating the importance of the protected assets configuring the controller system 1, and can be set by the user.

In the specification, the "threat level" is an index indicating a security threat to the controller system 1, and can be set by the user.

In the specification, the "measures needed risk level" is an index indicating the protection to be ensured in the controller system 1, and can be set by the user.

The threat analysis database 6106 stores in advance the importance level for the protected assets of the controller system 1 and the threat level for security threats.

The user inputs the measures needed risk level into the threat scenario creation part 632. The threat scenario creation part 632 creates a threat scenario list from the importance level and the threat level of the threat analysis database 6106 according to the measures needed risk level and the device type input by the user.

The attack pattern creation part 634 acquires the setting information in the controller system 1 and determines an attack pattern for the controller system 1 based on the acquired setting information. More specifically, the attack pattern creation part 634 creates one or more attack patterns for pre-evaluating the security functions set for the controller system 1 according to the threat scenario created by the threat scenario creation part 632 and the attack pattern list of the attack pattern database 6108.

The attack pattern creation part 634 presents the created one or more attack patterns to the user as candidates, and determines the attack pattern to be used for the attack by the user operation. That is, when the user inputs the selection of the attack pattern desired by the user among the created attack patterns to the attack pattern creation part 634, the attack pattern creation part 634 executes an attack on the controller system 1 according to the selected attack pattern. Then, the attack pattern creation part 634 outputs the evaluation result of the security functions by the attack according to the attack pattern to the user as an evaluation result report based on the event log acquired from the controller system 1.

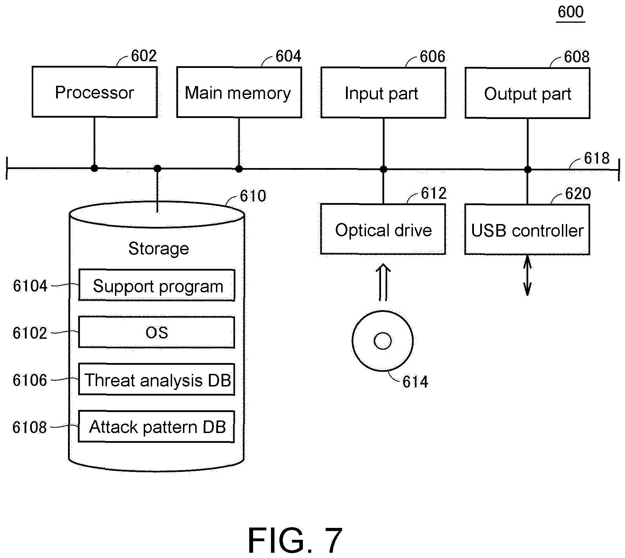

The configuration described with reference to FIG. 6 is realized by the hardware configuration of the support device 600 described below. FIG. 7 is a schematic diagram showing a hardware configuration example of the support device 600 connected to the controller system 1 according to the embodiment. For example, the support device 600 is realized by using hardware according to a general-purpose architecture (such as a general-purpose personal computer).

With reference to FIG. 7, the support device 600 includes a processor 602, a main memory 604, an input part 606, an output part 608, a storage 610, an optical drive 612, and a USB controller 620. These components are connected via a processor bus 618.

The processor 602 is configured by a CPU, a GPU, or the like and realizes setting processing for the controller system 1 by reading programs (such as an OS 6102 and a support program 6104) stored in the storage 610 and expanding them in the main memory 604 to execute them.

The main memory 604 is configured by a volatile storage device, such as DRAM or SRAM. The storage 610 is, for example, configured by a non-volatile storage device, such as HDD or SSD.

In addition to the OS 6102 for realizing the basic functions, the support program 6104 for providing the functions as the support device 600 is also stored in the storage 610. That is, the support program 6104 is executed by the computer connected to the controller system 1 to realize the support device 600 according to the embodiment. Further, the storage 610 stores the threat analysis database 6106 and the attack pattern database 6108.

The input part 606 is configured by a keyboard, a mouse or the like, and receives user operations. The output part 608 is configured by a display, various indicators, a printer, or the like, and outputs a processing result from the processor 602 and the like.

The USB controller 620 exchanges data with the controller system 1 and the like via USB connection.

The support device 600 includes an optical drive 612, and reads a program stored in a recording medium 614 (for example, an optical recording medium such as a digital versatile disc (DVD)), which non-transiently stores the computer-readable program, and installs the program in the storage 610 or the like.

The support program 6104 or the like executed by the support device 600 may be installed via the computer-readable storage medium 614, or may be installed by downloading from a server device or the like on the network. Further, the function provided by the support device 600 according to the embodiment may be realized by using a part of the modules provided by the OS.

FIG. 7 shows a configuration example in which the functions necessary as the support device 600 are provided by the processor 602 executing the programs. However, a part or all of the provided functions may be implemented by using a dedicated hardware circuit, such as an ASIC, an FPGA, and the like.

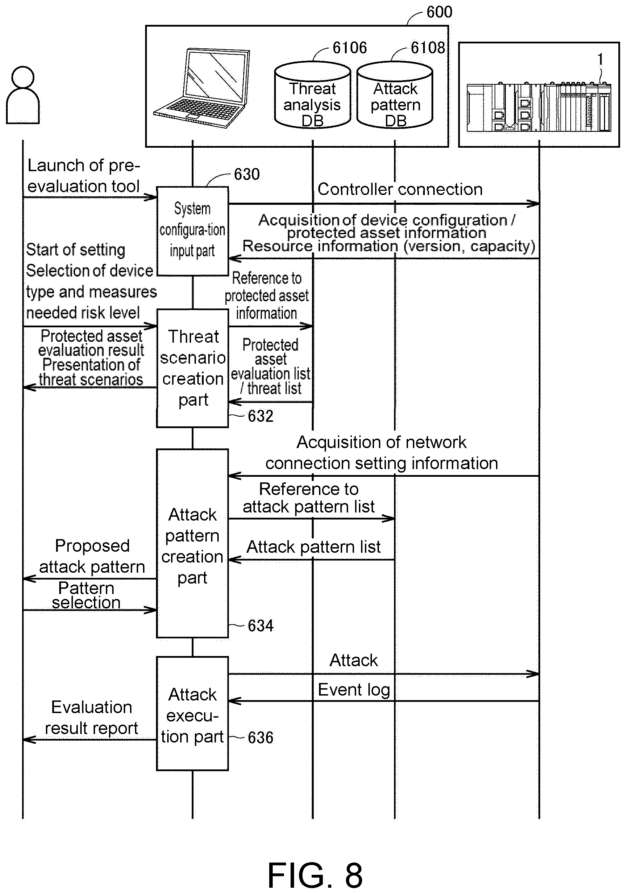

Next, in the system configuration which performs the pre-evaluation of the security functions by the support device 600 described above, the threat analysis and the pre-evaluation of the security functions performed at the time of device development and device startup will be described in detail. FIG. 8 is a sequence for illustrating the pre-evaluation of the security functions with the controller system and the support device according to the embodiment. In the sequence shown in FIG. 8, a typical example of the control system including the controller system 1 and the support device 600 will be described.

First, the user launches a pre-evaluation tool for the security unit 200 with the support device 600. When the pre-evaluation tool is launched, the system configuration input part 630 makes an inquiry to the controller system 1. The controller system 1 returns the device configuration information and the protected asset information of the controller system 1 to the system configuration input part 630 in response to the inquiry from the system configuration input part 630. The system configuration input part 630 acquires the device configuration information and the protected asset information from the controller system 1. Further, the system configuration input part 630 acquires the resource information of the security unit 200, such as the software and hardware version information and the resource capacity, from the security unit 200.

When the user selects to start the setting of the security unit 200 with the support device 600 and selects the device type, the threat scenario creation part 632 creates a threat scenario list from the importance level and the threat level of the threat analysis database 6106 according to the device type. At this time, the user also inputs the measures needed risk level that the security functions should maintain.

In this way, the threat scenario creation part 632 creates a threat scenario including one or more threats assumed for the controller system 1 based on the device configuration information and the protected asset information acquired from the controller system 1. More specifically, the threat scenario creation part 632 creates a protected asset evaluation list and a threat list by referring to the information in the threat analysis database 6106, and presents the user with a threat scenario list according to the measures needed risk level based on the protected asset evaluation list and the threat list. Further, the threat scenario creation part 632 may create a threat scenario list from the importance level and the threat level of the threat analysis database 6106 regardless of the device type.

The attack pattern creation part 634 acquires the network connection setting information from the target controller system 1. That is, the setting information acquired from the controller system 1 includes the network connection setting information that defines data communication between the controller system 1 and the external device. Then, the attack pattern creation part 634 refers to the threat scenario list created by the threat scenario creation part 632 and the attack pattern of the attack pattern database 6108 based on the acquired network connection setting information, and creates one or more proposed attack patterns storing items for pre-evaluating the security functions of the controller system 1, and presents the proposed attack patterns to the user.

The user selects a desired attack pattern from the proposed attack patterns. The attack pattern creation part 634 determines that only the attack pattern selected from the proposed attack patterns is in force.

The attack execution part 636 executes an attack on the controller system 1 according to the attack pattern created by the attack pattern creation part 634. Then, the attack execution part 636 evaluates the validity of the security functions set in the controller system 1 based on the behavior of the controller system 1 in response to the attack. More specifically, the attack execution part 636 evaluates the defense operation and the like of the controller system 1 against the attack based on the contents of the attack executed and the event log (operation history of the controller system 1 and the like) acquired from the controller system 1. The attack execution part 636 outputs the evaluation result as an evaluation result report. In this way, the controller system 1 can easily perform the pre-evaluation of the set security functions with the support device 600.

### <D. Processing Procedure>

Next, an example of processing in the case of performing the pre-evaluation of the security functions set in the security unit 200 described above according to the embodiment will be described.

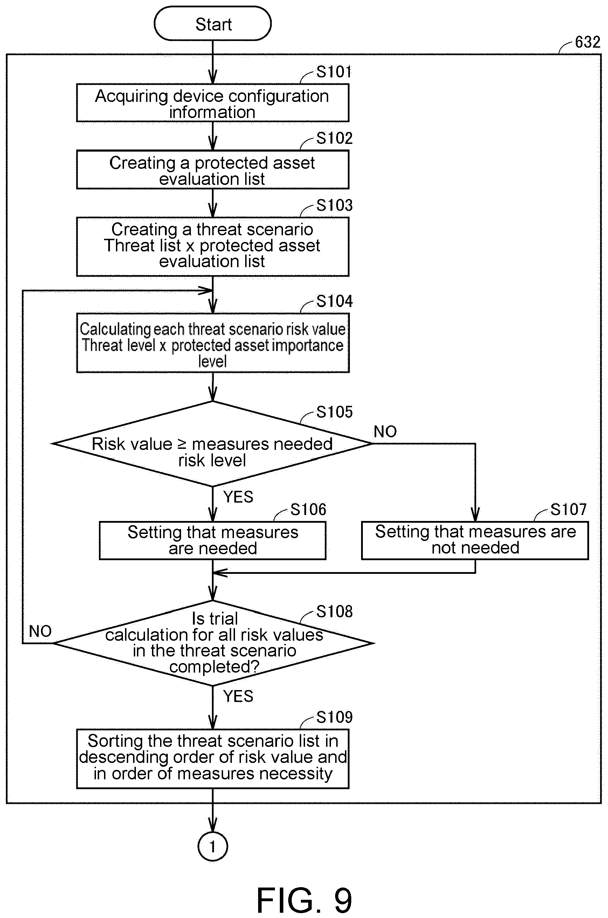

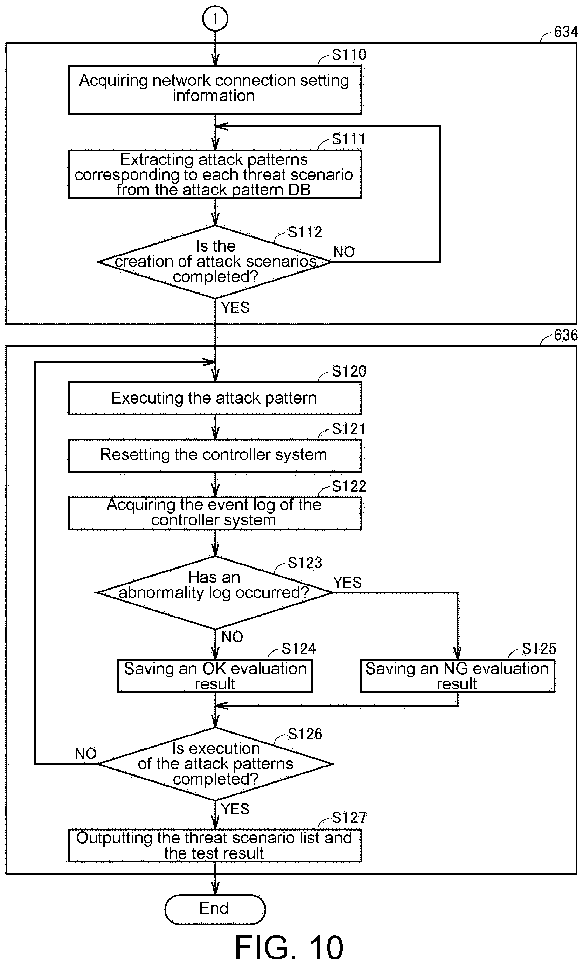

FIG. 9 and FIG. 10 are a flowchart showing a processing procedure related to the pre-evaluation of the security functions according to the embodiment.

When the processing shown in FIG. 9 is started, the support device 600 acquires the device configuration information by the system configuration input part 630 (step S101). Since the control purpose and important matters differ depending on the type of the device controlled by the controller system 1, the security functions to be set also differ.

For example, if the device controlled by the controller system 1 is a semiconductor manufacturing device, it is important to keep maintaining control of the device because basically no person enters the vicinity of the device in the manufacturing process. On the other hand, if the device controlled by the controller system 1 is a press device, since basically humans work in the vicinity of the device in the manufacturing process, it is important to reliably stop the device in an emergency to protect human safety. Therefore, in the case of semiconductor manufacturing device, the security functions of the configuration required to keep maintaining control of the device are set with priority, and in the case of press device, the security functions of the configuration required to reliably stop the device are set with priority.

In step S101, the system configuration input part 630 inquires the controller system 1 of the device configuration information and the protected asset information, and acquires the device configuration information and the protected asset information from the controller system 1. Further, the system configuration input part 630 creates the device configuration as shown in FIG. 10 from the device configuration information and the protected asset information based on the device type information (such as the semiconductor manufacturing device, the press device, or the like) selected by the user.

Next, the support device 600 creates a protected asset evaluation list by the threat scenario creation part 632 according to the device configuration and the protected assets acquired by the system configuration input part 630 (step S102). The protected asset evaluation list includes a list of elements to be protected by the security functions as well as the corresponding attributes and importance levels.

The threat scenario creation part 632 creates a threat scenario after creating the protected asset evaluation list (step S103). More specifically, the threat scenario creation part 632 creates the threat scenario based on the threat list and the protected asset evaluation list. The threat list includes a list of attack contents and risks for each assumed attack location.

In the specification, "threat" means any event that prevents the equipment or machine from operating normally. In a control device centered on a PLC, typical threats include threats from four aspects: (1) attacks from higher-level devices such as databases, (2) attacks from field devices, (3) attacks via support devices, and (4) attacks via a storage medium attached to the control device such as a memory card. In addition, all physical ports on the control device pose a security risk of being attacked.

The threat scenario creation part 632 makes a list for each item that links the protected assets and the threats. The listed threat scenarios are also hereinafter referred to as a threat scenario list.

The threat scenario creation part 632 creates a threat scenario from the threat list and the protected asset evaluation list in step S103. The threat scenario creation part 632 creates a threat scenario by linking the threat list and the protected asset evaluation list with attributes. Then, the threat scenario creation part 632 calculates the risk value (each threat scenario risk value) for each item of the created threat scenario list (step S104). The risk value is an index showing the risk for a security threat, and is acquired, for example, by integrating the threat level of the threat list and the importance level of the protected asset evaluation list by a predetermined trial calculation method.

The threat scenario creation part 632 determines whether the risk value of the created threat scenario list is greater than or equal to the measures needed risk level set by the user (step S105). When the risk value is greater than or equal to the measures needed risk level (YES in step S105), the threat scenario creation part 632 sets that measures are needed for the items in the threat scenario list (step S106). On the other hand, when the risk value is less than the measures needed risk level (NO in step S105), the threat scenario creation part 632 sets that measures are not needed for the items in the threat scenario list (step S107).

The threat scenario creation part 632 determines whether the trial calculation of the necessity of measures has been completed for all the risk values in the created threat scenario list (step S108). When the trial calculation of the necessity of measures for all the risk values has not been completed (NO in step S108), the threat scenario creation part 632 returns the processing to step S104. When the trial calculation of the necessity of measures for all the risk values has been completed (YES in step S108), the threat scenario creation part 632 sorts the items in the threat scenario list in descending order of risk values and in order of necessity of measures (step S109).

An attack scenario is created based on the threat scenario list (including one or more threat scenarios) determined by the above procedure.

In step S110, the attack pattern creation part 634 connects to the controller system 1 and acquires the network connection setting information from the controller system 1. In step Sill, the network connection setting information includes information such as setting of data exchanged by the controller system 1 (such as tag data link settings), the IP address, and the variable map. The attack pattern creation part 634 extracts the attack patterns corresponding to each threat scenario included in the threat scenario list from the attack pattern database 6108.

The attack pattern creation part 634 determines whether the creation of the attack patterns corresponding to all the threat scenarios included in the threat scenario list is completed (step S112). When the creation of the attack patterns corresponding to all the threat scenarios has not been completed (NO in step S112), the attack pattern creation part 634 returns the processing to step Sill. When the creation of the attack patterns corresponding to all the threat scenarios has been completed (YES in step S112), the attack pattern creation part 634 ends the processing.

The above procedure determines one or more attack patterns.

In step S120, the attack execution part 636 selects one attack pattern among the one or more attack patterns determined previously and executes the attack on the controller system 1. In step S121, the attack execution part 636 resets the controller system 1. This is a processing to eliminate the influence of the previous attack. In step S122, the attack execution part 636 acquires the event log from the controller system 1. Since the acquired event log includes information indicating the internal state caused by the previous attack, the performance of the controller system 1 against the executed attack can be evaluated by evaluating the contents of the event log.

More specifically, in step S123, the attack execution part 636 refers to the acquired event log and determines whether an abnormality log has occurred (step S123). When the abnormality log has not occurred (NO in step S123), the attack execution part 636 saves "OK" as the evaluation result for the executed attack (step S124). When the abnormality log has occurred (YES in step S123), the attack execution part 636 saves "NG" as the evaluation result for the executed attack (step S125).

In step S126, the attack execution part 636 determines whether the execution of all the created attack patterns has been completed. When the execution of all the created attack patterns has not been completed (NO in step S126), the attack execution part 636 returns the processing to step S120. When the execution of all the created attack patterns has been completed (YES in step S120), the attack execution part 636 outputs an attack pattern list for the executed attacks and a test result (evaluation result report) for each attack pattern (step S127). Then, the attack execution part 636 ends the processing.

### <E. Creation of Attack Pattern>

Next, the processing related to the creation of the attack patterns will be described.

### (e1: Attack Pattern Database)

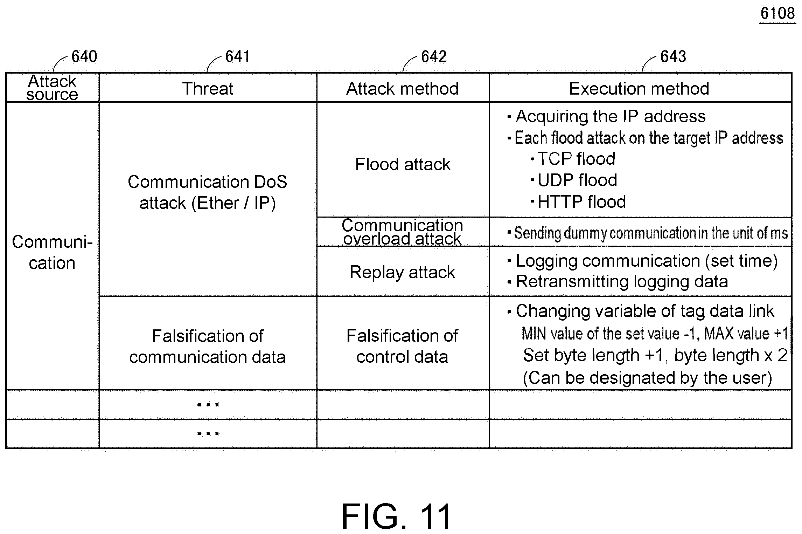

FIG. 11 is a schematic diagram showing an example of the attack pattern database 6108 used in the controller system 1 according to the embodiment. With reference to FIG. 11, the attack pattern database 6108 defines the contents of an attack for evaluating a threat according to a threat scenario.

More specifically, the attack pattern database 6108 includes an attack source 640, a threat 641, an attack method 642, and an execution method 643. Each of the attack source 640, the threat 641 and the attack method 642 corresponds to the threat scenario.

The attack source 640 indicates the source in which the threatening action is performed; the threat 641 indicates the contents of the attack; and the attack method 642 indicates a specific attack method. For each of these threats, the execution method 643 defines the contents of the test to be performed.

The attack pattern creation part 634 creates an attack pattern by aggregating the target execution methods 643 with reference to the attack pattern database 6108 according to the target threat scenario.

### (e2: Threat Scenario)

The support device 600 acquires necessary information from the controller system 1 and creates a threat scenario. Hereinafter, an example of information of the controller system 1 that can be used to create a threat scenario will be described.

### (1) Tag Data Link

The controller system 1 establishes a connection called a tag data link when exchanging data with another control system or control device by using the EtherNet/IP communication protocol. By acquiring the settings of the established connection, the connection destination and the contents of the exchanged data of the controller system 1 can be specified. The threat scenario can be determined based on such specified information. For example, an attack such as spoofing or disguising the device to which the controller system 1 is connected is assumed.

The tag data link setting includes the address of the device that is connected, the communication method, the connection type, the transmission interval, and the like. In addition, the tag data link setting includes the definition of a tag or tag set in which the data to be transmitted is specified.

In this way, the threat scenario creation part 632 may determine the threat scenario based on the setting information of the connection established by the controller system 1 with the external device. By referring to the setting information of such a tag data link, a threat scenario for the controller system 1 can be determined.

### (2) Shared Variable Information

Any data can also be shared between the controller system 1 and another control system or control device. Further, any variable such as an ordinary variable, an enumeration type, an array type, a structural type, and a common body type can be shared and set as the shared data type. An attack that disguises such a shared variable is assumed.

In this way, the threat scenario creation part 632 may determine the threat scenario based on the information of the variables shared in the controller system 1.

### (3) Function Block in the User Program

An attack using a variable table referred to by a function block specified in the user program is assumed. In addition to input and output variables, the function block has a table of locally referenced local variables.

The threat scenario creation part 632 may determine the threat scenario based on the information of the variables referred to in the user program executed by the controller system 1. An attack that disguises such an input variable, output variable, and local variable table is assumed.

Using any information that can be acquired from the controller system 1 as described above, a threat scenario can be determined, and an attack pattern corresponding to the determined threat scenario can be determined.

### <F. User Interface>

Next, an example of the user interface provided by the controller system 1 will be described.

### (f1: Settings of the Attack Pattern)

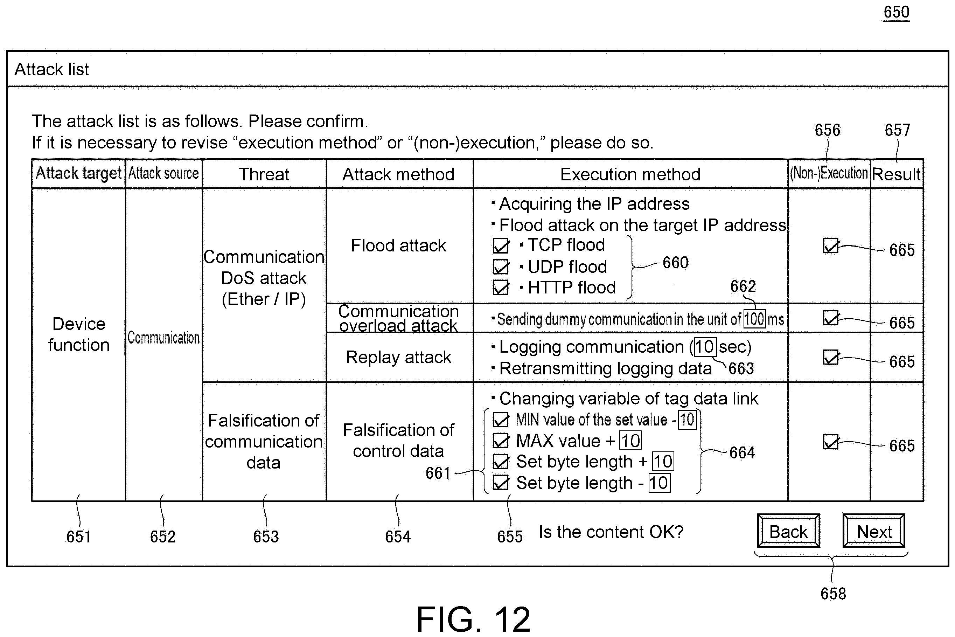

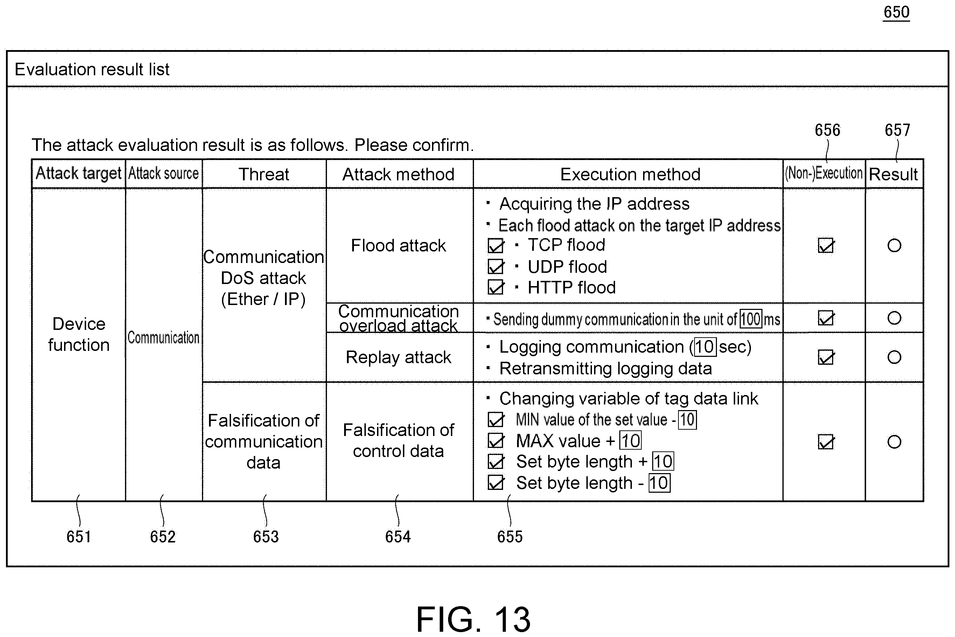

FIG. 12 is a diagram showing an example of a user interface screen related to an attack pattern provided by the controller system 1 according to the embodiment. FIG. 13 is a diagram showing an example of the user interface screen showing an evaluation result of an attack executed according to the settings shown in FIG. 12.

With reference to FIG. 12, the user interface screen 650 shows a proposed attack pattern created by the attack pattern creation part 634. More specifically, the user interface screen 650 includes an attack target 651, an attack source 652, a threat 653, and an attack method 654 for each attack pattern. These items mean attack scenarios. Further, the execution method 655 is included for each attack pattern. The attack scenario and the execution method 655 correspond to things in which the elements corresponding to the threat scenario are extracted from the contents of the attack pattern database 6108 (FIG. 11).

The user interface screen 650 includes an execution/non-execution 656 and an evaluation result 657 for each attack pattern. The execution/non-execution 656 can accept a flag that determines whether to execute an attack according to the corresponding attack pattern. Further, the evaluation result 657 indicates the result of executing an attack according to the corresponding attack pattern, as will be described later.

The user determines the contents of the attack pattern to be actually executed with reference to the user interface screen 650. For example, the execution method 655 includes check boxes 660 and 661 for accepting the designation of whether each candidate needs to be executed when there are multiple candidates for the item to be executed, and numerical boxes 662, 663 and 664 for accepting the setting of the degree for the candidates with adjustable degree of execution. That is, the check boxes 660 and 661 correspond to an instruction as to which attack pattern should be selected from the candidates of one or more attack patterns. Further, the numerical boxes 662, 663 and 664 correspond to instructions for adjusting the degree of attack included in the attack pattern.

The user can set the contents of any attack desired to be executed by operating the check boxes 660 and 661 and/or the numerical boxes 662, 663 and 664.

When the user completes a series of settings, by operating a page change button 658, the user can make necessary settings even when the candidates of the attack patterns span multiple pages.

An attack on the controller system 1 is executed according to the attack pattern determined by such an operation. The result is displayed on the evaluation result 657 of the user interface screen 650 as shown in FIG. 13.

### (f2: Output of the Evaluation Result of the Security Functions)

The controller system 1 according to the embodiment can output the evaluation result for the security functions acquired by the attack executed according to the attack pattern. An example of the user interface screen when outputting such an evaluation result report is shown.

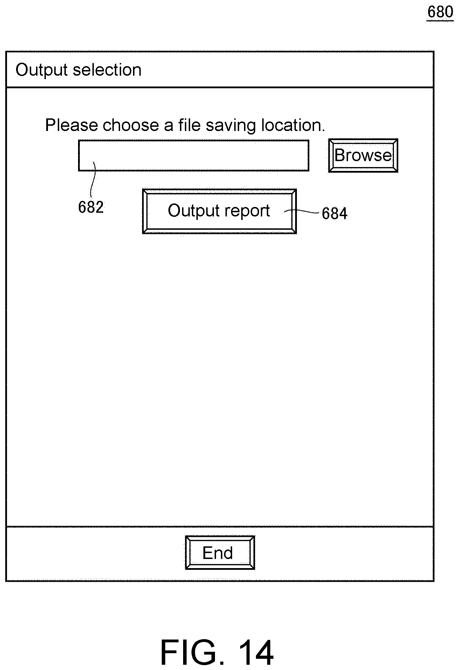

FIG. 14 is a diagram showing an example of the user interface screen related to output of an evaluation result provided by the controller system 1 according to the embodiment. With reference to FIG. 14, a user interface screen 680 includes an input box 682 that accepts the setting of a file name to which the evaluation result is output, and an output execution button 684.

The user inputs the file name into the input box 682 to output the evaluation result acquired by executing the attack according to the set attack pattern, and then presses the output execution button 684 to output the evaluation result to the specified file name. The output evaluation result may include the contents of the corresponding attack scenario and the execution method in addition to the contents of the evaluation result 657 of the user interface screen 650 shown in FIG. 13.

### <G. Appendix>

The embodiments as described above include the following technical concepts.

### [Configuration 1]

A controller system (1) including:
a control unit (100) that executes a control calculation for controlling a control target;
a security unit (200) that is connected to the control unit and is in charge of a security function for the controller system;
an attack pattern creation part (634) that acquires setting information in the controller system and creates an attack pattern for the controller system based on the acquired setting information; and
an attack execution part (636) that executes an attack on the controller system according to the created attack pattern and evaluates validity of the security function set in the controller system based on a behavior of the controller system in response to the attack.

### [Configuration 2]

The controller system according to Configuration 1, further including:
a threat scenario creation part (632) that creates a threat scenario including one or more threats assumed for the controller system based on device configuration information and protected asset information acquired from the controller system.

### [Configuration 3]

The controller system according to Configuration 2, wherein the setting information includes network connection setting information that defines data communication between the controller system and an external device.

### [Configuration 4]

The controller system according to Configuration 2 or Configuration 3, wherein the threat scenario creation part determines the threat scenario based on setting information of connection established by the controller system with an external device.

### [Configuration 5]

The controller system according to any one of Configurations 2 to 4, wherein the threat scenario creation part determines the threat scenario based on information of a variable shared in the controller system.

### [Configuration 6]

The controller system according to any one of Configurations 2 to 5, wherein the threat scenario creation part determines the threat scenario based on information of a variable referred to in a user program executed by the controller system.

### [Configuration 7]

The controller system according to any one of Configurations 1 to 6, wherein the attack pattern creation part presents (650) the created one or more attack patterns to a user as candidates, and determines an attack pattern to be used for the attack by a user operation.

### [Configuration 8]

The controller system according to Configuration 7, wherein the user operation includes at least one of an instruction (660, 661) instructing which attack pattern to select from the candidates of the one or more attack patterns and an instruction (662, 663, 664) instructing to adjust a degree of the attack included in the attack pattern.

### [Configuration 9]

A support device (600) connected to a controller system which includes a control unit (100) that executes a control calculation for controlling a control target and a security unit (200) that is connected to the control unit and is in charge of a security function, the support device including:
an attack pattern creation part (634) that acquires setting information in the controller system and creates an attack pattern for the controller system based on the acquired setting information; and
an attack execution part (636) that executes an attack on the controller system according to the created attack pattern and evaluates validity of the security function set in the controller system based on a behavior of the controller system in response to the attack.

### [Configuration 10]

An evaluation method performed by a controller system (1),
wherein the controller system includes a control unit (100) that executes a control calculation for controlling a control target and a security unit (200) that is connected to the control unit and is in charge of a security function for the controller system,
the evaluation method including:
   acquiring setting information in the controller system (S101, S110);
   creating an attack pattern for the controller system based on the acquired setting information (S111, S112);
   executing an attack on the controller system according to the created attack pattern (S120, S121); and
   evaluating validity of the security function set in the controller system based on a behavior of the controller system in response to the attack (S122).

### <H. Advantages>

According to the controller system according to the embodiment, the validity of the security functions set for the controller system 1 can be easily pre-evaluated even by a user having little specialized knowledge.

The embodiments disclosed herein are exemplary and should not be construed restrictive in all aspects. The scope of the disclosure is defined by the claims instead of the above descriptions, and it is intended to include the equivalent of the scope of the claims and all modifications within the scope.

### Description of Reference Numerals

1: Controller system; 100: Control unit; 102, 202, 302, 602: Processor; 104, 204, 304: Chipset; 106, 206, 306: Primary storage device; 108, 208, 308: Secondary storage device; 110, 210: Communication controller; 112, 212, 620: USB controller; 114, 214, 314: Memory card interface; 115, 215, 315: Memory card; 116, 118, 120, 216, 218: Network controller; 122, 322: Internal bus controller; 124, 224, 324: Indicator; 200: Security unit; 300: Safety unit; 400: Functional unit; 450: Power supply unit; 500: Field device; 600: Support device; 604: Main memory; 606: Input part; 608: Output part; 610: Storage; 612: Optical drive; 614: Recording medium; 618: Processor bus; 630: System configuration input part; 632: Threat scenario creation part; 634: Attack pattern creation part; 636: Attack execution part; 640, 652: Attack source; 641, 653: Threat; 642, 654: Attack method; 643, 655: Execution method; 650, 680: User interface screen; 640, 651: Attack target; 656: Execution/non-execution; 657: Evaluation result; 658: Page change button; 660, 661: Check box; 662, 663, 664: Numerical box; 682: Input box; 684: Output execution button; 6102: OS; 6104: Support program; 6106: Threat analysis database; 6108: Attack pattern database.

## Claims

1. A controller system comprising:
a control unit that executes a control calculation for controlling a control target;
a security unit that is connected to the control unit and is in charge of a security function for the controller system;
an attack pattern creation part that acquires setting information in the controller system and creates an attack pattern for the controller system based on the acquired setting information; and
an attack execution part that executes an attack on the controller system according to the created attack pattern and evaluates validity of the security function set in the controller system based on a behavior of the controller system in response to the attack.

2. The controller system according to claim 1, further comprising:
a threat scenario creation part that creates a threat scenario comprising one or more threats assumed for the controller system based on device configuration information and protected asset information acquired from the controller system.

3. The controller system according to claim 2, wherein the setting information comprises network connection setting information that defines data communication between the controller system and an external device.

4. The controller system according to claim 2 or claim 3, wherein the threat scenario creation part determines the threat scenario based on setting information of connection established by the controller system with an external device.

5. The controller system according to any one of claims 2 to 4, wherein the threat scenario creation part determines the threat scenario based on information of a variable shared in the controller system.

6. The controller system according to any one of claims 2 to 5, wherein the threat scenario creation part determines the threat scenario based on information of a variable referred to in a user program executed by the controller system.

7. The controller system according to any one of claims 1 to 6, wherein the attack pattern creation part presents the created one or more attack patterns to a user as candidates, and determines an attack pattern to be used for the attack by a user operation.

8. The controller system according to claim 7, wherein the user operation comprises at least one of an instruction instructing which attack pattern to select from the candidates of the one or more attack patterns and an instruction instructing to adjust a degree of the attack included in the attack pattern.

9. A support device connected to a controller system which comprises a control unit that executes a control calculation for controlling a control target and a security unit that is connected to the control unit and is in charge of a security function, the support device comprising:
an attack pattern creation part that acquires setting information in the controller system and creates an attack pattern for the controller system based on the acquired setting information; and
an attack execution part that executes an attack on the controller system according to the created attack pattern and evaluates validity of the security function set in the controller system based on a behavior of the controller system in response to the attack.

10. An evaluation method performed by a controller system,
wherein the controller system comprises a control unit that executes a control calculation for controlling a control target and a security unit that is connected to the control unit and is in charge of a security function for the controller system,
the evaluation method comprising:
acquiring setting information in the controller system;
creating an attack pattern for the controller system based on the acquired setting information;
executing an attack on the controller system according to the created attack pattern; and
evaluating validity of the security function set in the controller system based on a behavior of the controller system in response to the attack.
